# EUROPEAN PATENT SPECIFICATION

(11) **EP 4 495 814 B1**
(45) Date of publication and mention of the grant of the patent: **25.03.2026**
(21) Application number: 24189320.5
(22) Date of filing: 18.07.2024
(51) Int. Cl.: G06F 21/53, H04L 9/40

(54) **RUNTIME PATCHING METHODS FOR ACHIEVING CYBER DECEPTION IN SOFTWARE APPLICATIONS**
LAUFZEITMODIFIKATIONSVERFAHREN ZUR ERZIELUNG VON CYBERTÄUSCHUNG IN SOFTWAREANWENDUNGEN
PROCÉDÉS DE CORRECTION D'EXÉCUTION POUR OBTENIR UNE CYBER-DÉCEPTION DANS DES APPLICATIONS LOGICIELLES

(30) Priority: 18.07.2023 US 202363527568 P; 06.12.2023 US 202363606782 P; 20.05.2024 US 202463649504 P; 10.07.2024 US 202418768207
(43) Date of publication of application: 22.01.2025
(73) Proprietor: Dynatrace LLC, Boston, Massachusetts 02210 (US)
(72) Inventor: KAHLHOFER, Mario, 4020 Linz (AT); KERN, Patrick, 4020 Linz (AT)
(74) Representative: Bittner, Thomas L.

(56) References cited:
- US-A1- 2019 068 640
- US-B1- 10 972 503
- MARIO KAHLHOFER ET AL: "Application Layer Cyber Deception without Developer Interaction", ARXIV.ORG, CORNELL UNIVERSITY LIBRARY, 201 OLIN LIBRARY CORNELL UNIVERSITY ITHACA, NY 14853, 21 May 2024 (2024-05-21), XP091762960

## Description

### Field

The present disclosure relates to runtime patching methods for achieving cyber deception in software applications.

### Background

Cyber deception refers to techniques to mislead attackers into interacting with simulated data, services, or devices. There is no shortage of research on the benefits of cyber deception. Techniques such as honeypots or honey tokens are effective in slowing-down and deterring adversaries, providing threat intelligence, and improving incident detection and response. What is still a barrier to the widespread adoption of cyber deception technology is their deployment in real-world software systems and the orchestration and automation of such systems. Lance Spitzner, one of the first to study honeypots and honeytokens, commented in 2019, three decades after their inception, that cyber deception was not held back by the concept, but the technology. Recent advances in virtualization technology enhanced the applicability of "classic" honeypots, but the practical application of deception techniques that are closely intertwined with applications (e.g., fully automated honeytokens in file systems) has not yet been fully realized. Intertwining deception techniques tightly with software systems is claimed to increase their effectiveness compared to self-contained honeypots, which are easier to discern from genuine assets. Modern research on cyber deception and moving target defense mimics characteristics of real data and strives towards dynamic and personalized deception. Such new concepts often need to dynamically place decoys into already built software application, as well as adapting them regularly. These requirements are most critical when deception technology is provided "as a service".

Cyber deception can be implemented in the network layer, the system layer, the application layer or the data layer of a computing system. This disclosure focuses on cyber deception in the application layer, i.e., techniques that are linked to specific classes of applications, such as web applications.

Three typical use cases for application layer deception are as follows. For a decoy request, code is added to the HTML payload of a HTTP response. If adversaries probe the associated application for vulnerabilities, they will waste time in exploiting this endpoint because it seems to carry a path traversal weakness. Access attempts to this endpoint are then detected. To make the previous use case more interactive, one can patch an "admin/api"endpoint into an application and respond to it with some deceptive payload. This is commonly referred to as fake API use case. Assuming an adversary has managed to gain access to a (container) file system, one can place files that appear sensitive (e.g., a "service-token") and detect access attempts to them. This is commonly referred to as a honeytoken use case.

Software applications, however, are rarely deployed by the team that wrote the code, and often the responsibility for security measures lies entirely elsewhere. While this situation is improving, it is valuable to explore how one can intertwine defensive cyber deception with applications without having control over the entire software development lifecycle. The desire to add cyber deception on top of an existing system becomes increasingly strong in large organizations, where security operators want to add cyber deception - among other security measures - consistently across hundreds of applications, following a unified process. Assuming that one only has access to built artifacts, which are typically distributed as container images, this adds a few technical challenges that are rarely addressed in the literature, e.g., dealing with a wide variety of software technologies, limited access to source code, and compatibility issues.

US 10,972,503 B1 discloses systems, methods, and computer-program products for deception mechanisms in a containerized environment. In various implementations, a deception platform can detect the configuration of a containerized environment, including namespaces, services, and configuration of the environment. The deception platform can determine appropriate decoy containerized services for the environment, and can deploy the decoy alongside production containerized service. The deception platform can further determine decoy breadcrumbs for luring attackers to the decoy containerized service. The decoy breadcrumbs can be injected into the environment at locations where an attacker will look for information for further infiltrating the environment. The deception platform can then monitor the decoy containerized service for unexpected accesses.

This section provides background information related to the present disclosure which is not necessarily prior art.

### Summary

This section provides a general summary of the disclosure, and is not a comprehensive disclosure of its full scope or all of its features. The invention is set out in the appended claims.

A computer-implemented method is presented for implementing cyber deception in a container orchestration system. The method includes: installing a deception manager on a cluster of a container orchestration system; configuring a storage medium on the cluster of the container orchestration system; registering, by the deception manager, the deception manager with a control plane of the container orchestration system; receiving, by the deception manager, a request to deploy a given application on the cluster from the control plane of the container orchestration system; and sending, by the deception manager, a modified deployment manifest for the given application to the control plane of the container orchestration system, where the modified deployment manifest references a particular shared library in the storage medium and the particular shared library is loaded first by an operating system running the container orchestration system.

Configuring the storage medium may further comprise copying the particular shared library into the storage medium.

The container orchestration system may be further defined as Kubernetes container orchestration system.

The method may further comprise mounting the storage medium and setting value of LD_PRELOAD environmental variable to reference the particular shared library in the storage medium in response to receiving the request to deploy the given application.

The method may further comprise at least one of: receiving, by the control plane, a request to start the given application; and starting, by the control plane, a pod for the given application in accordance with the modified deployment manifest.

The method may further comprise receiving a network request for the given application and executing a hook residing in the particular shared library in response to the network request.

The method may further comprise at least one of starting a process for the given application; loading, by the process, the particular shared library; identifying functions used by the process to receive network requests and to send network responses; and inserting hooks into the identified functions.

The hook may be configured to change a response status code or modify a header field in a response to the network request.

The method may further comprise at least one of reading, by the hook, a configuration file from the storage medium; comparing the network request to the configuration file; and changing the response to the network request according to the configuration file.

The method may further comprise at least one of reading, by the hook, a configuration file from the storage medium; comparing the network request to the configuration file; and changing the response to the network request in response to the network request and according to the configuration file.

According to an aspect, a non-transitory computer-readable medium has computer-executable instructions that, upon execution of the instructions by a processor of a computer, cause the computer to: register a deception manager with a control plane of a container orchestration system; receive a request to deploy a given application on the cluster from the control plane of the container orchestration system; send a modified deployment manifest for the given application from the deception manager to the control plane of the container orchestration system, where the modified deployment manifest references a particular shared library in the storage medium and the particular shared library is loaded first by an operating system running the container orchestration system; and execute a hook residing in the particular shared library, where the hook implements a cyber deception method.

The computer-executable instructions may further cause the computer to copy the particular shared library into the storage medium.

The container orchestration system may be further defined as Kubernetes container orchestration system.

The computer-executable instructions may further cause the computer to mount the storage medium and set value of LD_PRELOAD environmental variable to reference the particular shared library in the storage medium in response to receiving the request to deploy the given application.

The computer-executable instructions may further cause the computer to receive a request to start the given application; and start a pod for the given application in accordance with the modified deployment manifest.

The computer-executable instructions may further cause the computer to receive a network request for the given application and execute a hook residing in the particular shared library in response to the network request.

The computer-executable instructions may further cause the computer to load the particular shared library; identify functions used by a process to receive network request; and insert hooks into the identified functions.

The hook may be configured to change a response status code or modify a header field in a response to the network request.

The computer-executable instructions may further cause the computer to read a configuration file from the storage medium; compare the network request to the configuration file; and change the response to the network request according to the configuration file.

In response to receiving a request to deploy the given application, the method may mount the storage medium and set value of LD_PRELOAD environmental variable to reference the particular shared library in the storage medium. The method may also include receiving, by the control plane, a request to start the given application; and starting, by the control plane, a pod for the given application in accordance with the modified deployment manifest.

Upon receiving a network request for the given application, a hook residing in the particular shared library may be executed. In some embodiments, a process is started for the given application the particular shared library is loaded by the process; functions used by the process to receive network request are identified; and hooks are inserted into the identified functions. The hook may be configured to change a response status code or modify a header field in a response to the network request. In another example, the hook may read a configuration file from the storage medium; compare the network request to the configuration file; and change the response to the network request according to the configuration file.

Further areas of applicability will become apparent from the description provided herein. The description and specific examples in this summary are intended for purposes of illustration only and are not intended to limit the scope of the present disclosure.

### Drawings

The drawings described herein are for illustrative purposes only of selected embodiments and not all possible implementations, and are not intended to limit the scope of the present disclosure.
- Fig. 1: is a diagram depicting typical components of a Kubernetes cluster.
- Fig. 2: is a flowchart depicting a technique for implementing cyber deception in a container orchestration system.
- Fig. 3: is a diagram further illustrating the technique for implementing cyber deception in a Kubernetes cluster.
- Fig. 4A and 4B: are example configuration files.
- Fig. 5: shows example changes made to a deployment manifest.
- Fig. 6: is a diagram illustrating intercepted communication flow between the deception manager and an application at runtime.
- Fig. 7: is a block diagram providing an overview of the application memory at runtime.

Corresponding reference numerals indicate corresponding parts throughout the several views of the drawings.

### Detailed description

Example embodiments will now be described more fully with reference to the accompanying drawings.

Container orchestration systems are prevalent in modern computing. For example, Kubernetes is one of the most popular systems for deploying and managing cloud applications at scale. Kubernetes leverages containers to deploy and manage applications. While specific reference is made to Kubernetes, it is readily understood that the techniques described herein are applicable to other types of container orchestration systems.

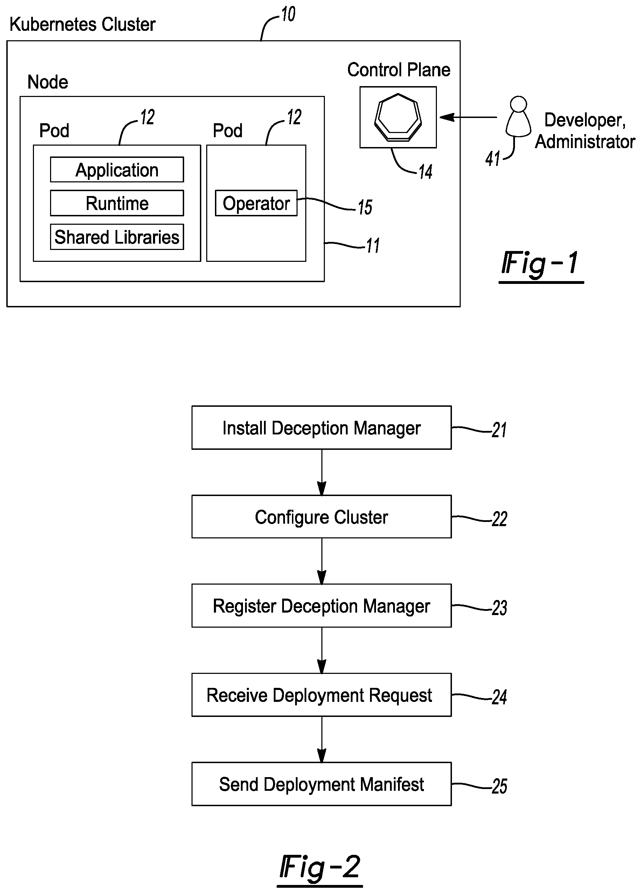

Figure 1 illustrates the typical components of a Kubernetes cluster 10. Starting with the smallest deployable compute unit in Kubernetes, namely pods 12, each pod 12 has a unique IP address inside a cluster and can contain one or more containers. Containers within a pod share the same network and, therefore, can reach each other via the network. A sidecar container can be used to enhance the functionality of the main container. Use cases for a sidecar container is monitoring, caching or SSL termination.

Resources within Kubernetes are described and deployed with a manifest file, typically written in YAML. Pods 12 can be deployed with their own manifest or created and managed by a deployment. Deployments have the advantage of leveraging mechanisms, like ReplicaSet, to ensure that there are always a certain number of pods of an application up and running. If a pod shuts down for an error or any other reason, this would get automatically detected. The ReplicaSet mechanism would then start a new pod to meet the minimum number of pods requirement defined within the deployment.

Deployments run inside a namespace. Within a namespace, the resources must be unique. For example, when a ReplicaSet mechanism starts three pods named test-application, it will add a different hash to each pod name to make it unique. Different namespaces get automatically created during cluster initialization. The most important one is the kube-system namespace, which contains objects created by the Kubernetes system. Examples of objects inside this namespace are the kube-dns and kube-proxy for managing network names and access across multiple nodes.

The node 11 is a physical machine or VM that runs a pod 12. A typical cluster 10 contains multiple nodes. The assignment of a pod 12 to a node 11 and the general management is controlled by the control plane 14. A namespace can span over multiple nodes, and a node typically contains multiple namespaces. It is important that namespaces are not bound to nodes but span across the whole cluster. Some resources, like a service, do not run or are bound to a specific node but exist within a namespace.

A service is an option to enable communication with the pods within a cluster. Pods are typically labelled, which the service can then use to identify which pods are related to it. The service knows which of the pods are healthy and available. Each node 11 has a kube-dns or kube-proxy pod for name resolving. To access a specific service, the URL looks as follows: <service-name>.<namespace>.svc.cluster.local. An ingress can be defined to forward a request from outside the cluster to a service, which then forwards the request to a specific pod.

The control plane 14 represents the core of Kubernetes. It manages the cluster 10 and resources like the nodes 11. The control plane 14 can reside on the same machine as a node 11 but mostly run on a separate virtual machine. The kube-apiserver is a pod and the core of the control plane. It manages the container lifecycle and acts as an entry point to the Kubernetes system. For example, when a developer deploys resources like a deployment or a service, the kube-apiserver is the pod that creates those new resources.

Operators 15 are software extensions of Kubernetes that apply the operator pattern. Operators 15 are using custom resources to automate tasks that a human normally would have to perform. The custom resource used within this disclosure is the mutating webhook configuration (MVC), and it is used to modify a manifest before it gets deployed. The mutating webhook configuration can define certain conditions and an address to a webhook. An example of a condition: the manifest has to specify that a pod is created within a namespace called "deception". Before the kube-apiserver deploys a manifest file, it will send the manifests to the webhook if the mutating webhook configuration condition applies. The webhook, also called mutating admission webhook, is a simple service that processes incoming requests with manifests and responds with a list of changes or with the info that no changes have to be applied. The webhook itself runs inside a container.

Kubernetes clusters aims to manage compute resources for a cloud environment, but not storage resource. A persistentVolume (PV) can be used for the cluster to access persistent storage. A persistentvolume is a cluster resource just like a node. Persistentvolumes can be manually created by the system administrator, also known as static persistentvolumes, or the administrator provides storage classes so that the persistentvolumes can get dynamically generated as needed, also known as dynamic persistentvolumes. Kubernetes does not manage the underlying storage of a persistentvolume. Pods can access the storage of a persistentvolume via a PersistentVolumeClaim (PVC). PVCs are created within a namespace, and multiple pods can use a PVC as long as they are in the same namespace. Only one PVC can be bound to a single persistentvolume and vice versa.

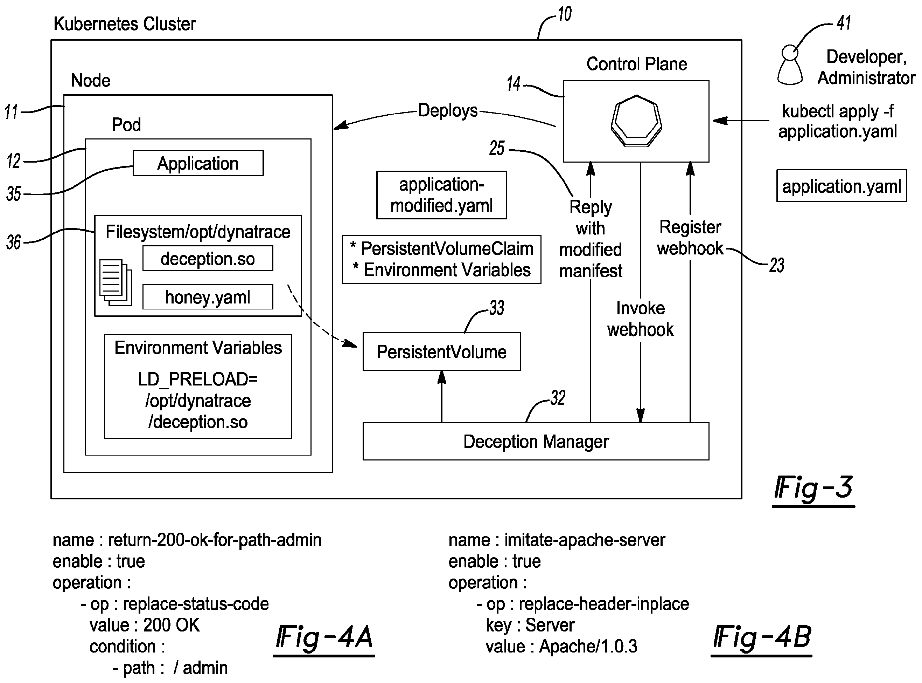

Figures 2 and 3 depict a technique for implementing cyber deception in a container orchestration system, such as Kubernetes. To enable this technique, a deception manager 32 is installed at 21 by a system administrator 41 on a cluster 10 of the container orchestration system. In the example embodiment, the deception manager 32 is implemented by an operator in Kubernetes.

The system administrator 41 also configures the remainder of the cluster in support of the deception manager 32 as indicated at 22. For example, the system administrator 41 configures a storage medium 33, such as a persistent volume, that is to be used by the deception manager 32. The storage medium may be used for storing a shared library and configuration files that are to be used by the deception manager 32. The system administrator 41 copies a particular shared library 36 (e.g., deception.so) that enables cyber deception methods into the storage medium 33. In one example, the particular shared library 36 is downloaded from a remote server. The system administrator 41 may also configure what selection criteria (labels, annotations, namespaces, etc.) will enable the deception on a pod.

Next, the deception manager 32 registers itself at 23 with the control plane 14 of the cluster 10 in the container orchestration system. In the example embodiment, the deception manager 32 registers a mutating webhook that will later be invoked when someone attempts to create new deployments in the cluster. A mutating webhook is a service running on a container that processes configuration over a specified endpoint and thus can be arbitrarily programmed.

When a given application 35 is about to be deployed to the cluster 10, the mutating webhook is invoked and a request is sent by the control plane 14 to the deception manager 32. Upon receiving the request to deploy the given application 35 at 24, the deception manager 32 sends a modified deployment manifest for the given application to the control plane 14 as indicated at 25. The modified deployment manifest references the particular shared library 36 in the storage medium 33. The particular shared library 36 is preferably loaded first on application start-up by the operating system running the container orchestration system.

LD_PRELOAD is an example of an environmental variable used by the dynamic linker of Linux to preload a shared library before all other shared libraries. The value of LD_PRELOAD identifies the library that is to be preloaded, for example by the path of the file containing the library. The shared library will be loaded at the starting phase of a process, meaning that modification of the shared library file (.so file) or the variable itself has no effect once the process has been started.

The deception manager 32 modifies the deployment manifest for the requested application in two ways. First, the deception manager 32 configures the storage medium (i.e., persistent volume) to be mounted in the pod such that the pod has access to the particular shared library 36 stored in the storage medium 33. Second, the deception manager 32 sets the value of the LD_PRELOAD variable to reference the particular shared library 36 in the storage medium 33.

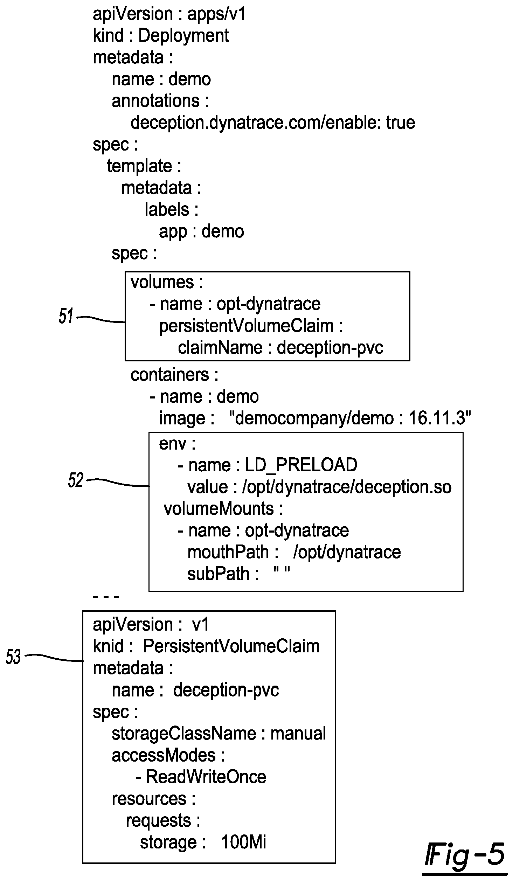

An example of the changes made by the deception manager 32 to the deployment manifest are seen in Figure 5. A first change 51 made to the deployment manifest specifies a new volume that shall be available to this deployment by referencing a persistent volume claim that also exists. A second change 52 made to the deployment manifest sets the "LD_PRELOAD" environment variable and mounts the volume that was previously specified to a specific location in the container image file system. The persistent volume claim is a "concrete request" for storage on a previously create persistent volume as indicated at 53. This may either be shared between pods or also be created for each pod if one wants to use different versions of the shared object or configuration file in the resulting application container. Although reference is made to LD_PRELOAD, it is envisioned that similar variables may be configured in other operating systems to preload a desired shared library.

In response to a request to start the given application 35, the control plane 14 will start a pod 12 for the given application 35 in accordance with the modified deployment manifest. More specifically, the control plane 14 starts a process for the given application and the process loads the particular shared library (e.g., deception.so). The particular shared library includes one or more hooks for implementing cyber deception methods. In a simplified example, an initial hook is invoked during startup of the given application. The initial hook in turn identifies particular functions used by the application and/or process and inserts additional hooks into the identified functions. For example, a function that receives network requests is identified and at least one additional hook is inserted into the function. Upon receipt of a network request by the given application, the additional hook is executed.

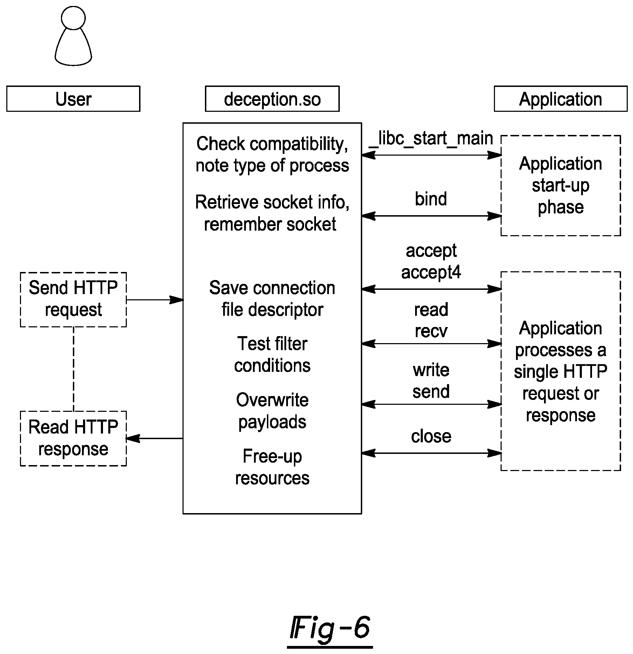

In the content of Hypertext Transfer Protocol (HTTP), example hooks for processing a network request are described in relation to Figure 6. A first example hook (i.e., "libc_start_main") is always invoked during application start-up and ensures that the current process is compatible with the cyber deception methods. Without loss of generality, for example, if the first process argument is "java" or "python" or "python3", one knows that the runtime environment of the application is supported. The first hook might also record what specific process it is running in because that might require a slightly different handling of the hooked functions.

A second example hook (i.e., "bind" hook) is invoked whenever the application attempts to bind a new socket handler. This hook also checks if the current socket is a socket used for network communication, like an IPv4 socket (and not some other socket, like a file system handler); and if so, the hook retrieves the port address of the socket that was just bound and possibly tests if the port is on the allowlist of ports that is intended for deception.

Upon receipt of a HTTP request packet by the given application, the given application will invoke the "accept" method which is also instrumented with a hook. Similar to the bind hook, this hook will retrieve the associated port number, and keep track of the file descriptor that is associated with that port number in a global storage. Additionally, this hook will check if the deception method is currently activated for this port number. It does so by retrieving a cached copy of the current configuration from the global state and evaluating if any deception method is set to enabled in the configuration.

Similar, a hook is instrumented in the "read" method that is called by the given application to read a HTTP packet payload. This hook knows and records what path is requested by the HTTP packet. If the configuration file has a condition on a certain path, this hook check if this condition is fulfilled, for example it tests if the path inside the HTTP packet starts with the path that is configured in the configuration file. Additionally, this hook checks if the current HTTP version is supported.

When the given application crafts a HTTP response packet, it will write data on the same socket as before. Thus, another hook is instrumented in the "write" method so that it can intercept the content that is written. For example, this hook may change or replace the status code and/or modify a header field in the response. This can be accomplished by searching for the matching key name in the buffer that holds the HTTP response packet, or parts of the HTTP response packet which will be transmitted over the network. It is noted that the buffer length is not changed.

Figures 4A and 4B depict example configuration files. Figure 4A, shows how one would configure the modification of a HTTP response status code, conditioned on certain HTTP request paths. For example, if a new HTTP request is received on path "/admin", the resulting HTTP response that follow shortly, shall always carry the value "200 OK" as the status code, regardless of what it was originally. If the original application does not serve this "/admin" path and typically responds with "404 Not Found", the cyber deception mechanism instead overwrites respond with "200 OK", which thus irritates hackers and security scanners.

Figure 4B shows how one would configure the modification of a HTTP response header field. For all HTTP responses (not conditioned on specific HTTP requests), overwrite the "Server" header field with the value "Apache/1.0.3", which is a very old version of Apache that should make hackers suspicious. These two cyber deception method are merely illustrative and not intended to be limiting as to the types of cyber deception methods that can be implemented.

Returning to Figure 6, the "close" method is hooked so that resources are freed-up in the global state 71, where socket and port information is tracked. Additional socket metadata is also cleaned up in the global map.

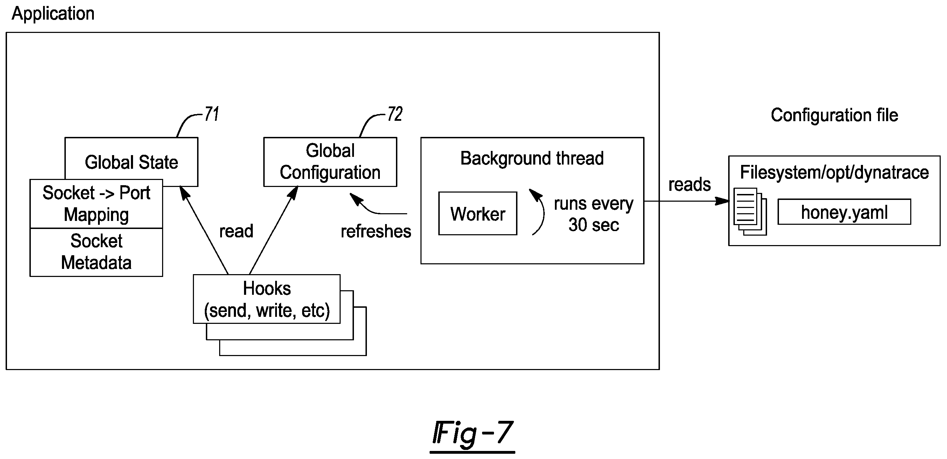

Figure 7 provides an overview of the application memory at runtime. In the example embodiment, two data structures are needed at runtime: a global state 71 and a global configuration 72. With the first example hook (i.e., "libc_start_main"), code is run to create a new background thread that asynchronously and at regular intervals reads a configuration file (e.g., honey.yaml) from the storage medium and updates a global configuration structure. All hooks that are run during normal operation reference this global configuration 72, which makes it possible to disable, update, or change any cyber deception method at runtime, without restarts, and with minimal delay.

On the other hand, the global state 71 keeps track of a mapping between socket numbers and port numbers. This is registered when the "accept" method is invoked, which is when a HTTP packet is first received. Later, hooks will reference this structure to easily retrieve a port number. Also, socket metadata information is stored in the global state 71. If the "read" hook successfully matches a configured path that shall be modified, a metadata object for this socket is registered in the global state 71. If later the "write" hook finds valid socket metadata, it continues to change the payload. If not, the "write" hook will not modify the payload. Lastly, the global state 71 is cleaned-up by the "close" hook to ensure that no memory leaks occur.

Implementing the deception use case "injecting deception elements into HTML payload documents" is not feasible by using hooks on the network interface level, where payload document data is already split up into multiple network packages, suitable and optimized for network transfer. Typically, a network hook has only access to individual network packages and not to the whole payload document. A network hook-based approach first needs to identify and buffer the network packages corresponding to a HTML payload document to identify an appropriate location to which deceptive code could be injected. Then, a version of the HTML payload document containing the deceptive code needs to be created and subdivided into new network packages which would then be sent instead of the original network packets for the payload data. Although this would be possible in theory, this approach would, besides other shortcomings, like considerable memory requirements, have substantial adverse effects on the response time of the affected application.

An alternative, more efficient, approach to inject deceptive code into HTML payload documents would perform the injection at an earlier point in time, when the payload document is created. This approach may use a request entry sensor and an on the fly browser agent injector, as described in FIG. 36 and corresponding text of U.S. Patent No. 9,571,591. This entry sensor would be injected into request handling methods and use a variant of the on the fly agent injector that, instead of adding a script tag to HTML payload that loads a browser agent when the payload is interpreted by a web browser, adds a script tag that contains scripting code that servers deceptive purposes. The on the fly agent injector may read the to be injected scripting code, and also control data defining a location within the payload document to which the deceptive code should be injected, from the configuration file.

Placement of the request entry sensor in request handling methods of the application may be performed by analyzing code that is loaded by the application, and available meta data describing this code, to identify request handling methods, and then adapt the code for those request handling methods to, in addition to execute code that creates responses containing HTML payload documents, also executes the request entry sensor, which manipulates those payload documents. Placement of the request entry sensors may either be performed by the particular shared library, or the particular shared library may trigger the loading of a separate library/agent designed for the manipulation of application code and delegate the injection of the request entry sensor to this separate library/agent. As an example, in application processes running Java^{®} virtual machines and executing Java bytecode, functionality provided by the Java virtual machine to manipulate bytecode may be used to inject the request entry sensor into request handling methods.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A computer-implemented method for implementing cyber deception in a container orchestration system, comprising:
installing a deception manager (32) on a cluster (10) of a container orchestration system;
configuring a storage medium (33) on the cluster (10) of the container orchestration system;
registering, by the deception manager (32), the deception manager (32) with a control plane (14) of the container orchestration system;
receiving, by the deception manager (32), a request to deploy a given application on the cluster (10) from the control plane (14) of the container orchestration system;
modifying, by the deception manager (32), a deployment manifest for the given application to include a reference to a particular shared library in the storage medium (33), wherein the deployment manifest specifies a configuration (72) for executing the given application; and
sending, by the deception manager (32), the modified deployment manifest for the given application to the control plane (14) of the container orchestration system in response to receiving the request, wherein the particular shared library is loaded prior to other libraries by an operating system running the container orchestration system.

2. The method of claim 1 further comprises mounting the storage medium (33) and setting value of LD_PRELOAD environmental variable to reference the particular shared library in the storage medium (33) in response to receiving the request to deploy the given application.

3. The method of claim 1 or 2 further comprises
receiving, by the control plane (14), a request to start the given application; and
starting, by the control plane (14), a pod (12) for the given application in accordance with the modified deployment manifest.

4. The method of any of the preceding claims further comprises receiving a network request for the given application and executing a hook residing in the particular shared library in response to the network request.

5. The method of claim 4 further comprises starting a process for the given application; loading, by the process, the particular shared library; identifying functions used by the process to receive network requests and to send network responses; and inserting hooks into the identified functions.

6. The method of claim 4 or 5, wherein the hook is configured to change a response status code or modify a header field in a response to the network request.

7. The method of claim 6 further comprises reading, by the hook, a configuration file from the storage medium (33); comparing the network request to the configuration file; and changing the response to the network request according to the configuration file.

8. The method of claim 6 or 7 further comprises reading, by the hook, a configuration file from the storage medium (33); comparing the network request to the configuration file; and changing the response to the network request in response to the network request and according to the configuration file.

9. A non-transitory computer-readable medium having computer-executable instructions that, upon execution of the instructions by a processor of a computer, cause the computer to
install a deception manager (32) on a cluster (10) of a container orchestration system;
configure a storage medium (33) on the cluster (10) of the container orchestration system;
register a deception manager (32) with a control plane (14) of the container orchestration system; receive a request to deploy a given application on the cluster (10) from the control plane (14) of the container orchestration system;
modify a deployment manifest for the given application to include a reference to a particular shared library in the storage medium (33), wherein the deployment manifest specifies a configuration (72) for executing the given application;
send the modified deployment manifest for the given application from the deception manager (32) to the control plane (14) of the container orchestration system in response to receiving the request, wherein the particular shared library is loaded prior to other libraries by an operating system running the container orchestration system; and
execute a hook residing in the particular shared library, where the hook implements a cyber deception method.

10. The non-transitory computer-readable medium of claim 9, wherein the computer-executable instructions further cause the computer to mount the storage medium (33) and set value of LD_PRELOAD environmental variable to reference the particular shared library in the storage medium (33) in response to receiving the request to deploy the given application.

11. The non-transitory computer-readable medium of claim 9 or 10, wherein the computer-executable instructions further cause the computer to receive a request to start the given application; and start a pod (12) for the given application in accordance with the modified deployment manifest.

12. The non-transitory computer-readable medium of any of claims 9 to 11, wherein the computer-executable instructions further cause the computer to receive a network request for the given application and execute a hook residing in the particular shared library in response to the network request.

13. The non-transitory computer-readable medium of claim 12, wherein the computer-executable instructions further cause the computer to load the particular shared library; identify functions used by a process to receive network request; and insert hooks into the identified functions.

14. The non-transitory computer-readable medium of claim 12 or 13, wherein the hook is configured to change a response status code or modify a header field in a response to the network request.

15. The non-transitory computer-readable medium of claim 14, wherein the computer-executable instructions further cause the computer to read a configuration file from the storage medium (33); compare the network request to the configuration file; and change the response to the network request according to the configuration file.

## Patentansprüche

1. Computerimplementiertes Verfahren zum Implementieren von Cyber-Täuschung in einem Container-Orchestrierungssystem, umfassend:
Installieren eines Täuschungsmanagers (32) in einem Cluster (10) eines Container-Orchestrierungssystems;
Konfigurieren eines Speichermediums (33) in dem Cluster (10) des Container-Orchestrierungssystems;
Registrieren, durch den Täuschungsmanager (32), des Täuschungsmanagers (32) bei einer Steuerebene (14) des Container-Orchestrierungssystems;
Empfangen, durch den Täuschungsmanager (32), einer Anforderung zum Einsetzen einer gegebenen Anwendung in dem Cluster (10) von der Steuerebene (14) des Container-Orchestrierungssystems;
Modifizieren, durch den Täuschungsmanager (32), eines Einsetzmanifests für die gegebene Anwendung, um einen Verweis auf eine bestimmte gemeinsam genutzte Bibliothek in dem Speichermedium (33) aufzunehmen, wobei das Einsetzmanifest eine Konfiguration (72) zum Ausführen der gegebenen Anwendung spezifiziert; und
Senden, durch den Täuschungsmanager (32), des modifizierten Einsetzmanifests für die gegebene Anwendung an die Steuerebene (14) des Container-Orchestrierungssystems als Reaktion auf das Empfangen der Anforderung, wobei die bestimmte gemeinsam genutzte Bibliothek vor anderen Bibliotheken durch ein Betriebssystem geladen wird, das das Container-Orchestrierungssystem ausführt.

2. Verfahren nach Anspruch 1, ferner umfassend ein Mounten des Speichermediums (33) und ein Einstellen des Werts einer Umgebungsvariablen LD_PRELOAD, um auf die bestimmte gemeinsam genutzte Bibliothek in dem Speichermedium (33) als Reaktion auf das Empfangen der Anforderung zum Einsetzen der gegebenen Anwendung zu verweisen.

3. Verfahren nach Anspruch 1 oder 2, ferner umfassend
Empfangen, durch die Steuerebene (14), einer Anforderung zum Starten der gegebenen Anwendung; und
Starten, durch die Steuerebene (14), eines Pods (12) für die gegebene Anwendung gemäß dem modifizierten Einsetzmanifest.

4. Verfahren nach einem der vorhergehenden Ansprüche, ferner umfassend ein Empfangen einer Netzwerkanforderung für die gegebene Anwendung und ein Ausführen eines Hooks, der sich in der bestimmten gemeinsam genutzten Bibliothek befindet, als Reaktion auf die Netzwerkanforderung.

5. Verfahren nach Anspruch 4, ferner umfassend ein Starten eines Prozesses für die gegebene Anwendung; Laden, durch den Prozess, der bestimmten gemeinsam genutzten Bibliothek; Identifizieren von Funktionen, die durch den Prozess verwendet werden, um Netzwerkanforderungen zu empfangen und Netzwerkantworten zu senden; und Einfügen von Hooks in die identifizierten Funktionen.

6. Verfahren nach Anspruch 4 oder 5, wobei der Hook konfiguriert ist, einen Antwortstatuscode zu ändern oder ein Header-Feld in einer Antwort auf die Netzwerkanforderung zu modifizieren.

7. Verfahren nach Anspruch 6, ferner umfassend ein Lesen, durch den Hook, einer Konfigurationsdatei aus dem Speichermedium (33); Vergleichen der Netzwerkanforderung mit der Konfigurationsdatei; und Ändern der Antwort auf die Netzwerkanforderung gemäß der Konfigurationsdatei.

8. Verfahren nach Anspruch 6 oder 7, ferner umfassend ein Lesen, durch den Hook, einer Konfigurationsdatei aus dem Speichermedium (33); Vergleichen der Netzwerkanforderung mit der Konfigurationsdatei; und Ändern der Antwort auf die Netzwerkanforderung als Reaktion auf die Netzwerkanforderung und gemäß der Konfigurationsdatei.

9. Nichtflüchtiges computerlesbares Medium mit computerausführbaren Anweisungen, die bei Ausführung der Anweisungen durch einen Prozessor eines Computers den Computer veranlassen zum
Installieren eines Täuschungsmanagers (32) in einem Cluster (10) eines Container-Orchestrierungssystems;
Konfigurieren eines Speichermediums (33) in dem Cluster (10) des Container-Orchestrierungssystems;
Registrieren eines Täuschungsmanagers (32) bei einer Steuerebene (14) des Container-Orchestrierungssystems;
Empfangen einer Anforderung zum Einsetzen einer gegebenen Anwendung in dem Cluster (10) von der Steuerebene (14) des Container-Orchestrierungssystems;
Modifizieren eines Einsetzmanifests für die gegebene Anwendung, um einen Verweis auf eine bestimmte gemeinsam genutzte Bibliothek in dem Speichermedium (33) aufzunehmen, wobei das Einsetzmanifest eine Konfiguration (72) zum Ausführen der gegebenen Anwendung spezifiziert;
Senden des modifizierten Einsetzmanifests für die gegebene Anwendung von dem Täuschungsmanager (32) an die Steuerebene (14) des Container-Orchestrierungssystems als Reaktion auf das Empfangen der Anforderung, wobei die bestimmte gemeinsam genutzte Bibliothek vor anderen Bibliotheken durch ein Betriebssystem geladen wird, das das Container-Orchestrierungssystem ausführt; und
Ausführen eines Hooks, der sich in der bestimmten gemeinsam genutzten Bibliothek befindet, wobei der Hook ein Cyber-Täuschungsverfahren implementiert.

10. Nichtflüchtiges computerlesbares Medium nach Anspruch 9, wobei die computerausführbaren Anweisungen den Computer ferner veranlassen zum Mounten des Speichermediums (33) und zum Einstellen des Werts einer Umgebungsvariablen LD_PRELOAD, um auf die bestimmte gemeinsam genutzte Bibliothek in dem Speichermedium (33) als Reaktion auf das Empfangen der Anforderung zum Einsetzen der gegebenen Anwendung zu verweisen.

11. Nichtflüchtiges computerlesbares Medium nach Anspruch 9 oder 10, wobei die computerausführbaren Anweisungen den Computer ferner veranlassen zum Empfangen einer Anforderung zum Starten der gegebenen Anwendung; und zum Starten eines Pods (12) für die gegebene Anwendung gemäß dem modifizierten Einsetzmanifest.

12. Nichtflüchtiges computerlesbares Medium nach einem der Ansprüche 9 bis 11, wobei die computerausführbaren Anweisungen den Computer ferner veranlassen zum Empfangen einer Netzwerkanforderung für die gegebene Anwendung und zum Ausführen eines Hooks, der sich in der bestimmten gemeinsam genutzten Bibliothek befindet, als Reaktion auf die Netzwerkanforderung.

13. Nichtflüchtiges computerlesbares Medium nach Anspruch 12, wobei die computerausführbaren Anweisungen den Computer ferner veranlassen zum Laden der bestimmten gemeinsam genutzten Bibliothek; Identifizieren von Funktionen, die durch einen Prozess verwendet werden, um Netzwerkanforderungen zu empfangen; und Einfügen von Hooks in die identifizierten Funktionen.

14. Nichtflüchtiges computerlesbares Medium nach Anspruch 12 oder 13, wobei der Hook konfiguriert ist, einen Antwortstatuscode zu ändern oder ein Header-Feld in einer Antwort auf die Netzwerkanforderung zu modifizieren.

15. Nichtflüchtiges computerlesbares Medium nach Anspruch 14, wobei die computerausführbaren Anweisungen den Computer ferner veranlassen zum Lesen einer Konfigurationsdatei aus dem Speichermedium (33); Vergleichen der Netzwerkanforderung mit der Konfigurationsdatei; und Ändern der Antwort auf die Netzwerkanforderung gemäß der Konfigurationsdatei.

## Revendications

1. Procédé mis en œuvre par ordinateur pour mettre en œuvre une cybertromperie dans un système d'orchestration de conteneurs, comprenant :
l'installation d'un gestionnaire de tromperie (32) sur une grappe (10) d'un système d'orchestration de conteneurs ;
la configuration d'un support de stockage (33) sur la grappe (10) du système d'orchestration de conteneurs ;
l'enregistrement, par le gestionnaire de tromperie (32), du gestionnaire de tromperie (32) avec un plan de commande (14) du système d'orchestration de conteneurs ;
la réception, par le gestionnaire de tromperie (32), d'une requête de déploiement d'une application donnée sur la grappe (10) à partir du plan de commande (14) du système d'orchestration de conteneurs ;
la modification, par le gestionnaire de tromperie (32), d'un manifeste de déploiement pour l'application donnée afin d'inclure une référence à une bibliothèque partagée particulière dans le support de stockage (33), le manifeste de déploiement spécifiant une configuration (72) pour exécuter l'application donnée ; et
l'envoi, par le gestionnaire de tromperie (32), du manifeste de déploiement modifié pour l'application donnée au plan de commande (14) du système d'orchestration de conteneurs en réponse à la réception de la requête, la bibliothèque partagée particulière étant chargée avant d'autres bibliothèques par un système d'exploitation exécutant le système d'orchestration de conteneurs.

2. Procédé selon la revendication 1, comprenant en outre le montage du support de stockage (33) et la définition de la valeur de la variable d'environnement LD_PRELOAD pour référencer la bibliothèque partagée particulière dans le support de stockage (33) en réponse à la réception de la requête de déploiement de l'application donnée.

3. Procédé selon la revendication 1 ou 2 comprenant en outre
la réception, par le plan de commande (14), d'une requête de démarrage de l'application donnée ; et
le démarrage, par le plan de commande (14), d'un pod (12) pour l'application donnée conformément au manifeste de déploiement modifié.

4. Procédé selon l'une quelconque des revendications précédentes, comprenant en outre la réception d'une requête de réseau pour l'application donnée et l'exécution d'un hook résidant dans la bibliothèque partagée particulière en réponse à la requête de réseau.

5. Procédé selon la revendication 4, comprenant en outre le démarrage d'un processus pour l'application donnée ; le chargement, par le processus, de la bibliothèque partagée particulière ; l'identification des fonctions utilisées par le processus pour recevoir des requêtes de réseau et pour envoyer des réponses de réseau ; et l'insertion de hooks dans les fonctions identifiées.

6. Procédé selon la revendication 4 ou 5, dans lequel le hook est configuré pour changer un code d'état de réponse ou modifier un champ d'en-tête dans une réponse à la requête de réseau.

7. Procédé selon la revendication 6, comprenant en outre la lecture, par le hook, d'un fichier de configuration à partir du support de stockage (33) ; la comparaison de la requête de réseau au fichier de configuration ; et la modification de la réponse à la requête de réseau en fonction du fichier de configuration.

8. Procédé selon la revendication 6 ou 7, comprenant en outre la lecture, par le hook, d'un fichier de configuration à partir du support de stockage (33) ; la comparaison de la requête de réseau au fichier de configuration ; et la modification de la réponse à la requête de réseau en réponse à la requête de réseau et conformément au fichier de configuration.

9. Support non transitoire lisible par ordinateur comportant des instructions exécutables par ordinateur qui, lors de l'exécution des instructions par un processeur d'un ordinateur, amènent l'ordinateur à
installer un gestionnaire de tromperie (32) sur une grappe (10) d'un système d'orchestration de conteneurs ;
configurer un support de stockage (33) sur la grappe (10) du système d'orchestration de conteneurs ;
enregistrer un gestionnaire de tromperie (32) avec un plan de commande (14) du système d'orchestration de conteneurs ; recevoir une requête de déploiement d'une application donnée sur la grappe (10) à partir du plan de commande (14) du système d'orchestration de conteneurs ;
modifier un manifeste de déploiement pour l'application donnée afin d'inclure une référence à une bibliothèque partagée particulière dans le support de stockage (33), le manifeste de déploiement spécifiant une configuration (72) pour exécuter l'application donnée ;
envoyer le manifeste de déploiement modifié pour l'application donnée depuis le gestionnaire de tromperie (32) au plan de commande (14) du système d'orchestration de conteneurs en réponse à la réception de la requête, la bibliothèque partagée particulière étant chargée avant d'autres bibliothèques par un système d'exploitation exécutant le système d'orchestration de conteneurs ; et
exécuter un hook résidant dans la bibliothèque partagée particulière, où le hook met en œuvre un procédé de cybertromperie.

10. Support non transitoire lisible par ordinateur selon la revendication 9, dans lequel les instructions exécutables par ordinateur amènent en outre l'ordinateur à monter le support de stockage (33) et à fixer la valeur de la variable environnementale LD_PRELOAD pour référencer la bibliothèque partagée particulière dans le support de stockage (33) en réponse à la réception de la requête de déploiement de l'application donnée.

11. Support non transitoire lisible par ordinateur selon la revendication 9 ou 10, dans lequel les instructions exécutables par ordinateur amènent en outre l'ordinateur à recevoir une requête de démarrage de l'application donnée ; et à démarrer un pod (12) pour l'application donnée conformément au manifeste de déploiement modifié.

12. Support non transitoire lisible par ordinateur selon l'une quelconque des revendications 9 à 11, dans lequel les instructions exécutables par ordinateur amènent en outre l'ordinateur à recevoir une requête de réseau pour l'application donnée et à exécuter un hook résidant dans la bibliothèque partagée particulière en réponse à la requête de réseau.

13. Support non transitoire lisible par ordinateur selon la revendication 12, dans lequel les instructions exécutables par ordinateur amènent en outre l'ordinateur à charger la bibliothèque partagée particulière ; à identifier des fonctions utilisées par un processus pour recevoir une requête de réseau ; et à insérer des hooks dans les fonctions identifiées.

14. Support non transitoire lisible par ordinateur selon la revendication 12 ou 13, dans lequel le hook est configuré pour changer un code d'état de réponse ou modifier un champ d'en-tête dans une réponse à la requête de réseau.

15. Support non transitoire lisible par ordinateur selon la revendication 14, dans lequel les instructions exécutables par ordinateur amènent en outre l'ordinateur à lire un fichier de configuration à partir du support de stockage (33) ; à comparer la requête de réseau au fichier de configuration ; et à modifier la réponse à la requête de réseau en fonction du fichier de configuration.
